# EUROPEAN PATENT APPLICATION

(11) **EP 4 574 345 A1**
(43) Date of publication of application: **25.06.2025**
(21) Application number: 22958210.1
(22) Date of filing: 06.09.2022
(51) Int. Cl.: B25J 5/00, B25J 19/00, B25J 13/08, B25J 19/02

(54) **ROBOT**

(71) Applicant: LG Electronics Inc., Yeongdeungpo-gu Seoul 07336 (KR)
(72) Inventor: LEE, Iljae, Seoul 06772 (KR); SHIN, Seongmin, Seoul 06772 (KR)
(74) Representative: Vossius & Partner Patentanwälte Rechtsanwälte mbB
(86) International application number: PCT/KR2022/013341
(87) International publication number: WO 2024/053755

(57) **Abstract**

The present embodiment comprises a driving wheel; casters disposed around the drive wheel; and sensors for sensing foreign substances on the surface of the casters; brushes for removing the foreign substances from the surface of the casters; and brush movers that move the brushes to contact positions contacting the casters or separation positions spaced apart from the casters, according to values sensed by the sensors.

## Description

### [Technical Field]

The present invention relates to robot.

### [Background Art]

A robot is a machine that automatically processes or operates a given task by own capabilities thereof, and the application fields of robots can be generally classified into industrial, medical, space, subsea use, and the like and can be used in various fields.

An example of the robot may include a driving wheel, a front caster, and a rear caster, and such a robot is disclosed in Korean Patent Publication No. 10-2020-0085661 A1 (published on July 15, 2020).

The robot includes a main body equipped with a driving unit, and the driving unit includes a drive wheel rotating around a drive shaft formed long in a left and right direction; and a driving motor providing rotational power to the driving wheel; a front caster provided on the front portion of the lower surface of the main body; and a rear caster provided on the rear portion of the bottom surface of the main body.

### [Disclosure]

### [Technical Problem]

The present embodiment provides a robot that can minimize damage to the floor caused by foreign substances on the caster.

The present embodiment provides a robot that can keep the caster clean and minimize the cleaning work of the caster.

The present embodiment provides a robot with improved cleanliness.

### [Technical Solution]

The robot according to the present embodiment comprises a driving wheel; a caster disposed around the driving wheel; and a brush configured to come into contact with the caster and remove foreign substances from a surface of the caster.

The robot may comprise a sensor configured to sense foreign substances on a surface of the caster; and a brush mover configured to move the brush to a contact position in contact with the caster or move the brush to a separation position away from the caster according to a sensing value of the sensor.

The sensor may comprise a Tof sensor or an infrared sensor disposed apart from the surface of the caster.

The brush mover may comprise a solenoid configured to operate when the sensing value of the sensor exceeds a reference value; and a spring connecting the solenoid and the brush.

The robot may comprise a processor configured to operate the brush mover in a forward mode or a backward mode.

For example, when the sensing value of the sensor exceeds a reference value, the brush may be moved forward to the caster.

When the sensing value of the sensor is within the reference value, the brush may be moved backward from the caster.

When a forward movement of the brush is completed, the brush may be maintained for a set time. The sensor may operate in a set cycle.

The robot may further comprise an input interface configured to vary the set cycle.

The robot may further comprise a fan installed in a main body and blowing air to the caster.

When the brush moves forward, the fan may be operated.

In another example, if the drive wheel is driving and the sensing value of the sensor exceeds a reference value, the brush may be moved forward with the caster.

In the other example, if the drive wheel is driving, the robot is moving in a straight line, and the sensing value of the sensor exceeds a reference value, the brush may be moved forward with the caster.

### [Advantageous Effect]

According to this embodiment, the brush can remove foreign substances attached to the caster from the caster, and damage to the floor caused by foreign substances attached to the caster can be minimized.

In addition, the caster can be kept clean, and the cleaning work of the caster can be minimized.

In addition, foreign substances separated from the caster by the air blown from the fan can be minimized from entering the main body, and the robot can be kept clean.

### [Brief Description Of The Drawings]

Fig. 1 illustrates an artificial intelligence (AI) device including a robot according to an embodiment of the present disclosure.
Fig. 2 illustrates an AI server connected to a robot according to an embodiment of the present disclosure.
Fig. 3 illustrates an AI system according to an embodiment of the present disclosure.
FIG. 4 is a perspective view of a robot according to the present embodiment,
FIG. 5 is a view illustrating a driving wheel and a caster according to the present embodiment,
FIG. 6 is a view illustrating an example of a caster and an example of a brush according to the present embodiment,
FIG. 7 is a view illustrating another example of a caster and another example of a brush according to the present embodiment,
FIG. 8 is a perspective view of a brush according to the present embodiment,
FIG. 9 is a view illustrating a caster of an example of a robot according to the present embodiment when foreign substances are removed by a brush,
FIG. 10 is a view illustrating a caster of another example of a robot according to the present embodiment when foreign substances are removed by a brush,
FIG. 11 is a view illustrating a caster of the other example of a robot according to the present embodiment when foreign substances are removed by a brush.

### [Best Mode]

Hereinafter, specific embodiments of the present invention will be described in detail with drawings.

Hereinafter, when it is described that an element is "fastened" or "connected" to another element, it may mean that the two elements are directly fastened or connected, or that a third element exists between the two elements and that the two elements are fastened or connected to each other by said third element. On the other hand, when it is described that an element is "directly fastened" or "directly connected" to another element, it may be understood that no third element exists between the two elements.

### <Robot>

A robot may refer to a machine that automatically processes or operates a given task by its own ability. In particular, a robot having a function of recognizing an environment and performing a self-determination operation may be referred to as an intelligent robot.

Robots may be classified into industrial robots, medical robots, home robots, military robots, and the like according to the use purpose or field.

The robot includes a driving unit may include an actuator or a motor and may perform various physical operations such as moving a robot joint. In addition, a movable robot may include a wheel, a brake, a propeller, and the like in a driving unit, and may travel on the ground through the driving unit or fly in the air.

### Artificial Intelligence (AI)>

Artificial intelligence refers to the field of studying artificial intelligence or methodology for making artificial intelligence, and machine learning refers to the field of defining various issues dealt with in the field of artificial intelligence and studying methodology for solving the various issues. Machine learning is defined as an algorithm that enhances the performance of a certain task through a steady experience with the certain task.

An artificial neural network (ANN) is a model used in machine learning and may mean a whole model of problem-solving ability which is composed of artificial neurons (nodes) that form a network by synaptic connections. The artificial neural network can be defined by a connection pattern between neurons in different layers, a learning process for updating model parameters, and an activation function for generating an output value.

The artificial neural network may include an input layer, an output layer, and optionally one or more hidden layers. Each layer includes one or more neurons, and the artificial neural network may include a synapse that links neurons to neurons. In the artificial neural network, each neuron may output the function value of the activation function for input signals, weights, and deflections input through the synapse.

Model parameters refer to parameters determined through learning and include a weight value of synaptic connection and deflection of neurons. A hyperparameter means a parameter to be set in the machine learning algorithm before learning, and includes a learning rate, a repetition number, a mini batch size, and an initialization function.

The purpose of the learning of the artificial neural network may be to determine the model parameters that minimize a loss function. The loss function may be used as an index to determine optimal model parameters in the learning process of the artificial neural network.

Machine learning may be classified into supervised learning, unsupervised learning, and reinforcement learning according to a learning method.

The supervised learning may refer to a method of learning an artificial neural network in a state in which a label for learning data is given, and the label may mean the correct answer (or result value) that the artificial neural network must infer when the learning data is input to the artificial neural network. The unsupervised learning may refer to a method of learning an artificial neural network in a state in which a label for learning data is not given. The reinforcement learning may refer to a learning method in which an agent defined in a certain environment learns to select a behavior or a behavior sequence that maximizes cumulative compensation in each state.

Machine learning, which is implemented as a deep neural network (DNN) including a plurality of hidden layers among artificial neural networks, is also referred to as deep learning, and the deep learning is part of machine learning. In the following, machine learning is used to mean deep learning.

### <Self-Driving>

Self-driving refers to a technique of driving for oneself, and a self-driving vehicle refers to a vehicle that travels without an operation of a user or with a minimum operation of a user.

For example, the self-driving may include a technology for maintaining a lane while driving, a technology for automatically adjusting a speed, such as adaptive cruise control, a technique for automatically traveling along a predetermined route, and a technology for automatically setting and traveling a route when a destination is set.

The vehicle may include a vehicle having only an internal combustion engine, a hybrid vehicle having an internal combustion engine and an electric motor together, and an electric vehicle having only an electric motor, and may include not only an automobile but also a train, a motorcycle, and the like.

At this time, the self-driving vehicle may be regarded as a robot having a self-driving function.

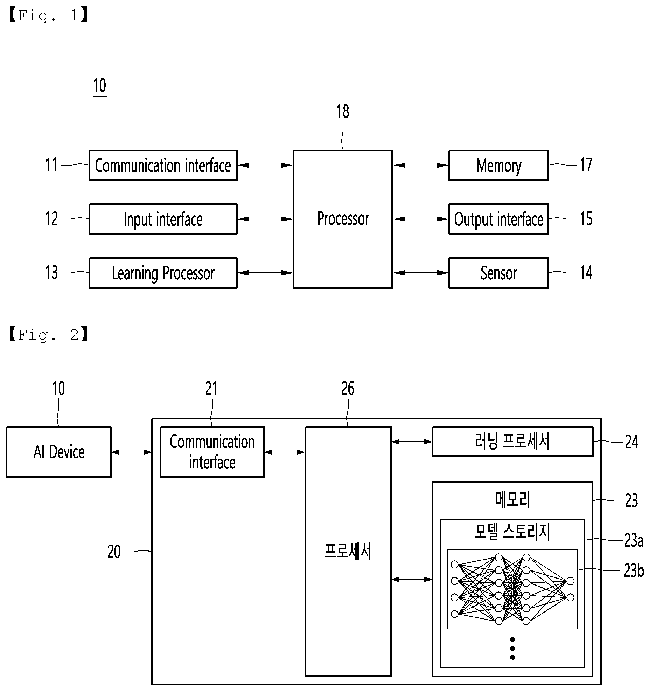

Fig. 1 illustrates an AI device including a robot according to an embodiment of the present disclosure.

The AI device 10 may be implemented by a stationary device or a mobile device, such as a TV, a projector, a mobile phone, a smartphone, a desktop computer, a notebook, a digital broadcasting terminal, a personal digital assistant (PDA), a portable multimedia player (PMP), a navigation device, a tablet PC, a wearable device, a set-top box (STB), a DMB receiver, a radio, a washing machine, a refrigerator, a desktop computer, a digital signage, a robot, a vehicle, and the like.

Referring to Fig. 1, the AI device 10 may include a communication interface 11, an input interface 12, a learning processor 13, a sensor 14, an output interface 15, a memory 17, and a processor 18.

The communication interface 11 may transmit and receive data to and from external devices such as other AI devices 10a to 10e and the AI server 20 by using wire/wireless communication technology. For example, the communication interface 11 may transmit and receive sensor information, a user input, a learning model, and a control signal to and from external devices.

The communication technology used by the communication interface 11 includes GSM (Global System for Mobile communication), CDMA (Code Division Multi Access), LTE (Long Term Evolution), 5G, WLAN (Wireless LAN), Wi-Fi (Wireless-Fidelity), Bluetooth, RFID (Radio Frequency Identification), Infrared Data Association (IrDA), ZigBee, NFC (Near Field Communication), and the like.

The input interface 12 may acquire various kinds of data.

At this time, the input interface 12 may include a camera for inputting a video signal, a microphone for receiving an audio signal, and a user input interface for receiving information from a user. The camera or the microphone may be treated as a sensor, and the signal acquired from the camera or the microphone may be referred to as sensing data or sensor information.

The input interface 12 may acquire a learning data for model learning and an input data to be used when an output is acquired by using learning model. The input interface 12 may acquire raw input data. In this case, the processor 18 or the learning processor 13 may extract an input feature by preprocessing the input data.

The learning processor 13 may learn a model composed of an artificial neural network by using learning data. The learned artificial neural network may be referred to as a learning model. The learning model may be used to an infer result value for new input data rather than learning data, and the inferred value may be used as a basis for determination to perform a certain operation.

At this time, the learning processor 13 may perform AI processing together with the learning processor 24 of the AI server 20.

At this time, the learning processor 13 may include a memory integrated or implemented in the AI device 10. Alternatively, the learning processor 13 may be implemented by using the memory 17, an external memory directly connected to the AI device 10, or a memory held in an external device.

The sensor 14 may acquire at least one of internal information about the AI device 10, ambient environment information about the AI device 10, and user information by using various sensors.

Examples of the sensors included in the sensor 14 may include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar, and a radar.

The output interface 15 may generate an output related to a visual sense, an auditory sense, or a haptic sense.

At this time, the output interface 15 may include a display unit for outputting time information, a speaker for outputting auditory information, and a haptic module for outputting haptic information.

The memory 17 may store data that supports various functions of the AI device 10. For example, the memory 17 may store input data acquired by the input interface 12, learning data, a learning model, a learning history, and the like.

The processor 18 may determine at least one executable operation of the AI device 10 based on information determined or generated by using a data analysis algorithm or a machine learning algorithm. The processor 18 may control the components of the AI device 10 to execute the determined operation.

To this end, the processor 18 may request, search, receive, or utilize data of the learning processor 13 or the memory 17. The processor 18 may control the components of the AI device 10 to execute the predicted operation or the operation determined to be desirable among the at least one executable operation.

When the connection of an external device is required to perform the determined operation, the processor 18 may generate a control signal for controlling the external device and may transmit the generated control signal to the external device.

The processor 18 may acquire intention information for the user input and may determine the user's requirements based on the acquired intention information.

The processor 18 may acquire the intention information corresponding to the user input by using at least one of a speech to text (STT) engine for converting speech input into a text string or a natural language processing (NLP) engine for acquiring intention information of a natural language.

At least one of the STT engine or the NLP engine may be configured as an artificial neural network, at least part of which is learned according to the machine learning algorithm. At least one of the STT engine or the NLP engine may be learned by the learning processor 13, may be learned by the learning processor 24 of the AI server 20, or may be learned by their distributed processing.

The processor 18 may collect history information including the operation contents of the AI apparatus 100 or the user's feedback on the operation and may store the collected history information in the memory 17 or the learning processor 13 or transmit the collected history information to the external device such as the AI server 20. The collected history information may be used to update the learning model.

The processor 18 may control at least part of the components of AI device 10 so as to drive an application program stored in memory 17. Furthermore, the processor 18 may operate two or more of the components included in the AI device 10 in combination so as to drive the application program.

Fig. 2 illustrates an AI server connected to a robot according to an embodiment of the present disclosure.

Referring to Fig. 2, the AI server 20 may refer to a device that learns an artificial neural network by using a machine learning algorithm or uses a learned artificial neural network. The AI server 20 may include a plurality of servers to perform distributed processing, or may be defined as a 5G network. At this time, the AI server 20 may be included as a partial configuration of the AI device 10, and may perform at least part of the AI processing together.

The AI server 20 may include a communication interface 21, a memory 23, a learning processor 24, a processor 26, and the like.

The communication interface 21 can transmit and receive data to and from an external device such as the AI device 10.

The memory 23 may include a model storage unit 23a. The model storage unit 23a may store a learning or learned model (or an artificial neural network 26b) through the learning processor 24.

The learning processor 24 may learn the artificial neural network 26b by using the learning data. The learning model may be used in a state of being mounted on the AI server 20 of the artificial neural network, or may be used in a state of being mounted on an external device such as the AI device 10.

The learning model may be implemented in hardware, software, or a combination of hardware and software. If all or part of the learning models are implemented in software, one or more instructions that constitute the learning model may be stored in memory 23.

The processor 26 may infer the result value for new input data by using the learning model and may generate a response or a control command based on the inferred result value.

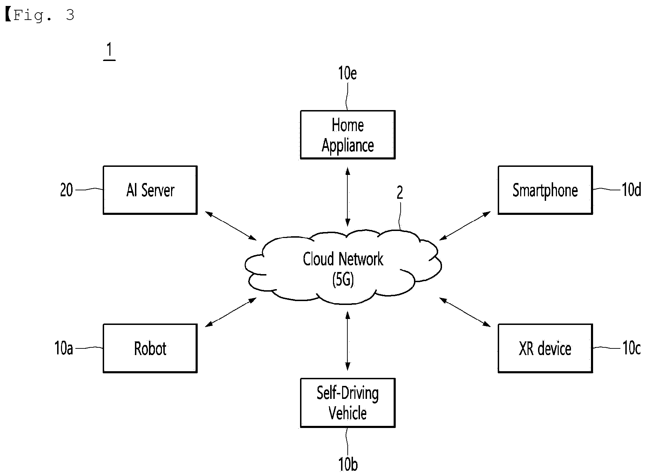

Fig. 3 illustrates an AI system 1 according to an embodiment of the present disclosure.

Referring to Fig. 3, in the AI system 1, at least one of an AI server 20, a robot 10a, a self-driving vehicle 10b, an XR device 10c, a smartphone 10d, or a home appliance 10e is connected to a cloud network 2. The robot 10a, the self-driving vehicle 10b, the XR device 10c, the smartphone 10d, or the home appliance 10e, to which the AI technology is applied, may be referred to as AI devices 10a to 10e.

The cloud network 2 may refer to a network that forms part of a cloud computing infrastructure or exists in a cloud computing infrastructure. The cloud network 2 may be configured by using a 3G network, a 4G or LTE network, or a 5G network.

That is, the devices 10a to 10e and 20 configuring the AI system 1 may be connected to each other through the cloud network 2. In particular, each of the devices 10a to 10e and 20 may communicate with each other through a base station, but may directly communicate with each other without using a base station.

The AI server 20 may include a server that performs AI processing and a server that performs operations on big data.

The AI server 20 may be connected to at least one of the AI devices constituting the AI system 1, that is, the robot 10a, the self-driving vehicle 10b, the XR device 10c, the smartphone 10d, or the home appliance 10e through the cloud network 2, and may assist at least part of AI processing of the connected AI devices 10a to 10e.

At this time, the AI server 20 may learn the artificial neural network according to the machine learning algorithm instead of the AI devices 10a to 10e, and may directly store the learning model or transmit the learning model to the AI devices 10a to 10e.

At this time, the AI server 20 may receive input data from the AI devices 10a to 10e, may infer the result value for the received input data by using the learning model, may generate a response or a control command based on the inferred result value, and may transmit the response or the control command to the AI devices 10a to 10e.

Alternatively, the AI devices 10a to 10e may infer the result value for the input data by directly using the learning model, and may generate the response or the control command based on the inference result.

Hereinafter, various embodiments of the AI devices 10a to 10e to which the above-described technology is applied will be described. The AI devices 10a to 10e illustrated in Fig. 3 may be regarded as a specific embodiment of the AI device 10 illustrated in Fig. 1.

### <AI + Robot>

The robot 10a, to which the AI technology is applied, may be implemented as a guide robot, a carrying robot, a cleaning robot, a wearable robot, an entertainment robot, a pet robot, an unmanned flying robot, or the like.

The robot 10a may include a robot control module for controlling the operation, and the robot control module may refer to a software module or a chip implementing the software module by hardware.

The robot 10a may acquire state information about the robot 10a by using sensor information acquired from various kinds of sensors, may detect (recognize) surrounding environment and objects, may generate map data, may determine the route and the travel plan, may determine the response to user interaction, or may determine the operation.

The robot 10a may use the sensor information acquired from at least one sensor among the lidar, the radar, and the camera so as to determine the travel route and the travel plan.

The robot 10a may perform the above-described operations by using the learning model composed of at least one artificial neural network. For example, the robot 10a may recognize the surrounding environment and the objects by using the learning model, and may determine the operation by using the recognized surrounding information or object information. The learning model may be learned directly from the robot 10a or may be learned from an external device such as the AI server 20.

At this time, the robot 10a may perform the operation by generating the result by directly using the learning model, but the sensor information may be transmitted to the external device such as the AI server 20 and the generated result may be received to perform the operation.

The robot 10a may use at least one of the map data, the object information detected from the sensor information, or the object information acquired from the external apparatus to determine the travel route and the travel plan, and may control the driving unit such that the robot 10a travels along the determined travel route and travel plan.

The map data may include object identification information about various objects arranged in the space in which the robot 10a moves. For example, the map data may include object identification information about fixed objects such as walls and doors and movable objects such as pollen and desks. The object identification information may include a name, a type, a distance, and a position.

In addition, the robot 10a may perform the operation or travel by controlling the driving unit based on the control/interaction of the user. At this time, the robot 10a may acquire the intention information of the interaction due to the user's operation or speech utterance, and may determine the response based on the acquired intention information, and may perform the operation.

### <AI + Robot + Self-Driving>

The robot 10a, to which the AI technology and the self-driving technology are applied, may be implemented as a guide robot, a carrying robot, a cleaning robot, a wearable robot, an entertainment robot, a pet robot, an unmanned flying robot, or the like.

The robot 10a, to which the AI technology and the self-driving technology are applied, may refer to the robot itself having the self-driving function or the robot 10a interacting with the self-driving vehicle 10b.

The robot 10a having the self-driving function may collectively refer to a device that moves for itself along the given movement line without the user's control or moves for itself by determining the movement line by itself.

The robot 10a and the self-driving vehicle 10b having the self-driving function may use a common sensing method so as to determine at least one of the travel route or the travel plan. For example, the robot 10a and the self-driving vehicle 10b having the self-driving function may determine at least one of the travel route or the travel plan by using the information sensed through the lidar, the radar, and the camera.

The robot 10a that interacts with the self-driving vehicle 10b exists separately from the self-driving vehicle 10b and may perform operations interworking with the self-driving function of the self-driving vehicle 10b or interworking with the user who rides on the self-driving vehicle 10b.

At this time, the robot 10a interacting with the self-driving vehicle 10b may control or assist the self-driving function of the self-driving vehicle 10b by acquiring sensor information on behalf of the self-driving vehicle 10b and providing the sensor information to the self-driving vehicle 10b, or by acquiring sensor information, generating environment information or object information, and providing the information to the self-driving vehicle 10b.

Alternatively, the robot 10a interacting with the self-driving vehicle 10b may monitor the user boarding the self-driving vehicle 10b, or may control the function of the self-driving vehicle 10b through the interaction with the user. For example, when it is determined that the driver is in a drowsy state, the robot 10a may activate the self-driving function of the self-driving vehicle 10b or assist the control of the driving unit of the self-driving vehicle 10b. The function of the self-driving vehicle 10b controlled by the robot 10a may include not only the self-driving function but also the function provided by the navigation system or the audio system provided in the self-driving vehicle 10b.

Alternatively, the robot 10a that interacts with the self-driving vehicle 10b may provide information or assist the function to the self-driving vehicle 10b outside the self-driving vehicle 10b. For example, the robot 10a may provide traffic information including signal information and the like, such as a smart signal, to the self-driving vehicle 10b, and automatically connect an electric charger to a charging port by interacting with the self-driving vehicle 10b like an automatic electric charger of an electric vehicle.

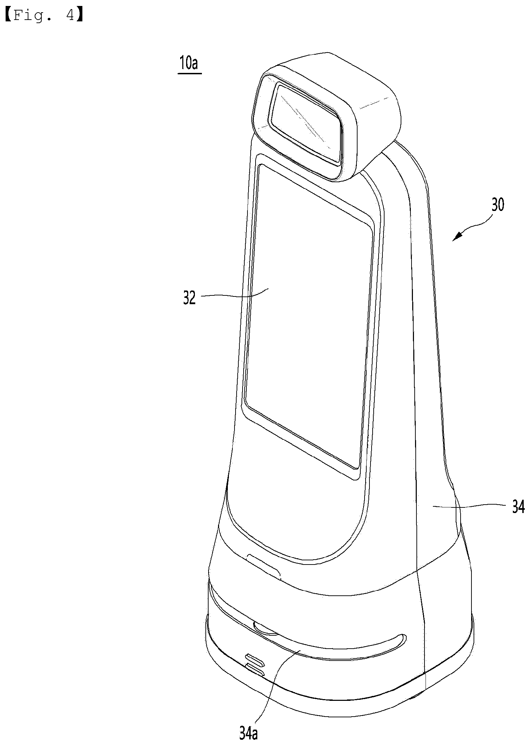

FIG. 4 is a perspective view of a robot according to the present embodiment.

The robot 10a may comprise a main body 30.

The robot 10a may be a guide robot that provides various information to users at an airport, subway, bus terminal, etc., a serving robot that can serve various items to guests at a restaurant, hotel, etc., or a delivery robot that can transport delivery items (hereinafter referred to as delivery items) such as food, medicine, and delivery items.

The main body 30 may be composed of a combination of multiple members and may be a robot body.

The main body 30 may be provided with at least one display 32, and the main body 30 may comprise at least one outer cover 34 that forms an exterior. The outer cover 34 may have a front opening 34a formed in the front. At least one camera that photographs the surroundings of the robot 10a may be placed on the main body 30.

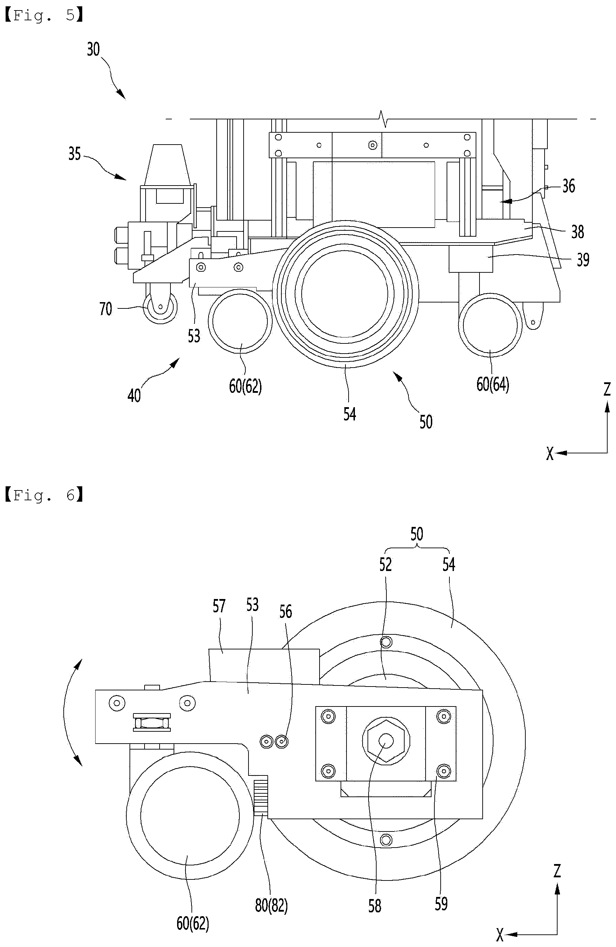

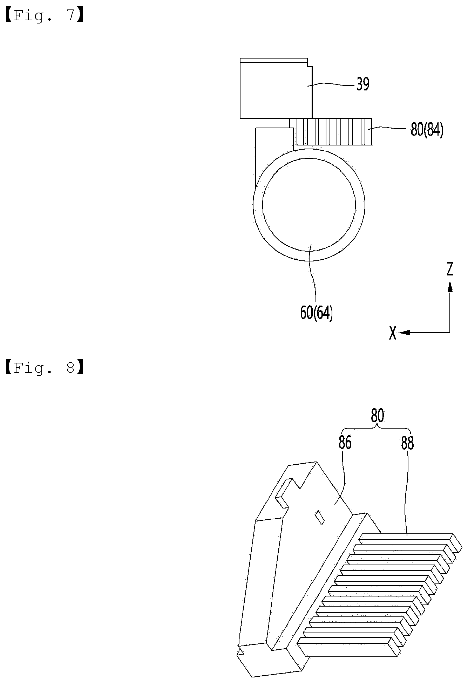

FIG. 5 is a view illustrating a driving wheel and a caster according to the present embodiment, FIG. 6 is a view illustrating an example of a caster and an example of a brush according to the present embodiment, FIG. 7 is a view illustrating another example of a caster and another example of a brush according to the present embodiment, and FIG. 8 is a perspective view of a brush according to the present embodiment,

The main body 30 may comprise a frame 36 disposed inside the outer cover 34.

A lidar 35 (shown in FIG. 5) that measures the position coordinates of a reflector by shooting a laser pulse and measuring the time it takes for the laser pulse to be reflected and returned may be arranged in the main body 30. The lidar 35 may be mounted on the main body 30 so as to be located inside the front opening 34a shown in FIG. 4. The laser pulse generated from the lidar 35 may pass through the opening 34a of the outer cover 34.

The frame 36 may include a base plate 38 spaced apart from the ground.

A driving unit 40 may be provided in the main body 30, particularly the frame 36.

The driving unit 40 may be a driving module that drives the robot 10a. The driving unit 40 can support the main body 30 so that the main body 30 is separated from the ground.

The driving unit 40 can include at least one driving wheel and a motor that drives the driving wheel.

An example of the driving unit 40 can include an in-wheel motor 50. The in-wheel motor 50 can have a motor 52 and a driving wheel 54.

The motor 52 can be coupled to a lower body 53 arranged at the lower part of the main body 30.

An example of the lower body 53 can be fixedly arranged at the lower part of the main body 30. Another example of the lower body 53 can be rotatably arranged at the lower part of the main body 30.

The lower body 53 can be arranged long in the front and rear direction X at the lower part of the base plate 38.

The lower body 53 may be a front mounter on which the in-wheel motor 50 and the front caster 62 are mounted together.

The lower body 53 may be a front link that rotates around a rotation axis 56 (shown in FIG. 6). The rotation axis 56 may be formed on a screw or bolt that is fastened to the main body 30, particularly the frame 36.

A damper 57 may be connected to the rotation axis 56. The damper 57 may include at least one damping member connected to the rotation axis 56 and a damper case that protects the damping member from the outside of the damping member. The damper case may be fastened to the lower body 53.

A motor mounter 59 to which the motor 52 of the in-wheel motor 50 is fastened with a fastening member 58 such as a bolt may be arranged on the lower body 53.

The driving wheel 54 may be disposed at the bottom of the main body 30. The driving wheel 54 may be rotated by the motor 52. The driving wheel 54 may be connected to the rotational axis of the motor 52 or may be connected to a reducer connected to the rotational axis of the motor 52. The driving wheel 54 may be connected to the motor 52 or the reducer and may be arranged at the bottom of the main body 30.

The driving unit 40 may comprise a caster 60 that assists the driving of the robot 10a by the driving wheel 54. The caster 60 may be disposed around the driving wheel 54. The caster 60 may be spaced apart from the driving wheel 54.

A plurality of casters 60 may be provided to the robot 10a. The plurality of casters may comprise a front caster 62 and a rear caster 64.

The front caster 62 may be spaced apart from the rear caster 64 in the front and rear direction X. An example of the front caster 62 can be mounted on the lower body 53.

The front caster 62 may be connected to the lower body 53 via a front vertical axis and may rotate 360° around the front vertical axis.

The front caster 62 may comprise a caster bracket whose front vertical axis protrudes upward and a caster wheel connected to the caster bracket via a horizontal axis and rotates around the horizontal axis.

The rear caster 64 may be formed with the same structure as the front caster 62. An example of the rear caster 64 may be mounted on a rear bracket 39 arranged on a base plate 38.

The rear caster 64 may be connected to the rear bracket 39 with a rear vertical axis and may rotate 360° around the rear vertical axis.

The rear caster 64 may comprise a caster bracket with a rear vertical axis protruding upward, and a caster wheel connected to the caster bracket with a horizontal axis and rotating around the horizontal axis.

Meanwhile, the robot 10a may further comprise an auxiliary wheel 70. The auxiliary wheel 70 may assist the front caster 62 so that the robot 10a can overcome obstacles such as bumps on the ground.

The auxiliary wheel 70 may be disposed further forward than the front caster 62, as shown in FIG. 5. As shown in FIG. 5, the distance from the front end of the main body 30 to the front end of the auxiliary wheel 70 may be shorter than the distance from the front end of the main body 30 to the front end of the front caster 62.

When the robot 10a moves forward, the auxiliary wheel 70 may pass over an obstacle before the front caster 62.

The driving wheel 54, the front caster 62, the rear caster 64, and the auxiliary wheel 70 may be provided as a left and right pair at the bottom of the main body 30.

The robot 10a may further comprise at least one brush 80 (shown in FIGS. 6 to 8).

The brush 80 may remove foreign substances attached to the surface of the caster 60.

The brush 80 may be arranged close to at least one of the front caster 62 and the rear caster 64.

The brush 80 may comprise a front brush 82 (shown in FIG. 6) that removes foreign substances attached to the surface of the front caster 62.

The brush 80 may comprise a rear brush 84 (shown in FIG. 7) that removes foreign substances attached to the surface of the rear caster 64.

The brush 80 may comprise a bracket 86 and a plurality of bristles 88 arranged on the bracket 81, as shown in FIG. 8.

The bracket 86 may be made of ABS material.

The bristles 88 may be made of a soft material.

An example of a brush 80 may be a bracket 81 mounted so that a plurality of hairs 88 face the caster 60 in the front and rear direction X, and another example of a brush 80 may be a bracket 81 mounted so that a plurality of hairs 88 face the caster 60 in the up and down direction Z.

An example of a front brush 82 may be a bracket 86 mounted on a lower body 53 so that a plurality of hairs 88 face the front caster 62 in the front and rear direction X, as shown in FIG. 6.

An example of a rear brush 84 may be a bracket 86 mounted on a rear bracket 39 so that a plurality of hairs 88 face the rear caster 64 in the up and down direction Z, as shown in FIG. 7.

The brush 80 is arranged to be in constant contact with the caster 60, so that it may remove foreign substances from the caster 60, and it is also possible to be arranged so that it can be separated from the caster 60, so that it does not interfere with the rotation of the caster 60.

When the brush 80 is disposed to be movable or rotatably placed around the caster 60, it may remove foreign substances from the caster 60 by coming into contact with the caster 60, and it can help the caster 60 rotate smoothly by being separated from the caster 60.

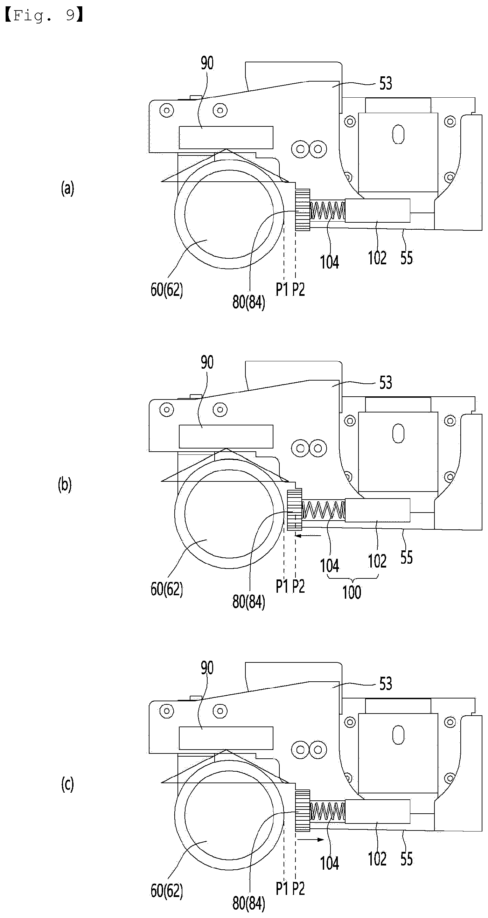

FIG. 9 is a view illustrating a caster of an example of a robot according to the present embodiment when foreign substances are removed by a brush.

Fig. 9 (a) is a view when the sensor 90 senses foreign substances on the surface of the caster 60, Fig. 9 (b) is a view when the brush 80 advances toward the caster 60, and Fig. 9 (c) is a view when the brush 80 retreats from the caster 60.

The robot 10a may comprise a sensor 90 and a brush mover 100.

The sensor 90 may sense foreign substances on the surface of the caster 60. The sensor 90 may sense a amount of foreign substances on the surface of the caster 60.

An example of the sensor 90 may be an infrared sensor disposed apart from the surface of the caster 60, and may be a Tof (Time of Flight) sensor or an IR (infrared ray) sensor.

The ToF sensor is a three-dimensional sensor that calculates the distance for the light emitted to the caster 60 through infrared waves to bounce back and recognize the three-dimensionality of foreign substances.

The IR sensor can sense a amount of foreign substances on the caster 60 by irradiating infrared rays toward the caster 60.

The sensor 90 can be placed on the main body 30, the lower body 53, or the rear bracket 39.

The sensor 90 can operate at a set cycle to sense foreign substances on the caster 60.

Examples of the set cycle can be 1 hour, 3 hours, 24 hours, 1 week, 1 month, etc.

The robot manager may change the set cycle through the input interface 12 of the robot 10a. When a change in the setting cycle is input through the input interface 12 of the robot 10a, the processor 18 may operate the sensor 90 with the changed setting cycle.

The robot manager may adjust the setting cycle according to the characteristics of the place where the robot 10a is installed.

The brush mover 100 may be a gap adjustment mechanism that adjusts the gap between the brush 80 and the caster 60.

The brush mover 100 may move the brush 80 to the contact position P1 and the separation position P2. The brush mover 100 may move the brush 80 in the front and rear direction X and may also move the brush 80 in the up and down direction Z.

The brush mover 100 may move the brush 80 to the contact position P1 where it comes into contact with the caster 60. The brush mover 100 may move the brush 80 to a separation position P2 separated from the caster 60.

The contact position P1 may be a position where the brush 80 removes foreign substances attached to the caster 60 from the caster 60.

The separation position P2 may be a position where the brush 80 is spaced apart from the caster 60 and the caster 60 can rotate without being obstructed by the brush 80.

The brush mover 100 may comprise a solenoid 102 that is operated when the sensing value of the sensor 90 exceeds a reference value.

An example of the brush mover 100 may further comprise a spring 104 connecting the solenoid 102 and the brush 80.

The solenoid 102 may be a driving source that provides a driving force to move the brush 80.

The spring 104 may absorb shock that may occur when the brush 80 comes into contact with the caster 60. The spring 104 may prevent the brush 80 from coming off and may generate an overlapping effect between the caster 60 and the brush 80.

An example of the spring 104 may be a coil spring. One end of the spring 104 may be connected to the shaft of the solenoid 102, and the other end of the spring 104 may be connected to the bracket 86 of the brush 80.

The brush mover 100 may be placed in a mounting portion 55 formed in the main body 30, the lower body 53, or the rear bracket 39.

The brush mover 100 may comprise a linear motor connected to the brush 80 if it is configured to move the brush 80, and it is also possible to comprise a power transmission member such as a motor and a gear that converts the rotational power of the motor into linear motion of the brush 80 in the motor and brush case.

Another example of the brush mover 100 may be a brush rotor that rotates the brush 60, and the brush rotor may rotate the brush 60 to a contact position P1 where it comes into contact with the caster 60, and may rotate the brush 80 to a separation position P2 where it is separated from the caster 60.

The processor 18 of the robot 10a may operate the sensor 90 at a set cycle (for example, 1 hour, 3 hours, 24 hours, 1 week, 1 month, etc.) so that the sensor 90 detects a foreign substance, as shown in (a) of FIG. 9.

The processor 18 of the robot 10a may output a signal to operate the brush mover 100.

The processor 18 of the robot 10a may output an operating signal of the brush mover 100 according to the sensing value of the sensor 90, and the brush mover 100 may move the brush 80 so that the brush 80 comes into contact with the caster wheel of the caster 60.

If the sensing value of the sensor 90 exceeds a reference value, the processor 18 may output a signal to operate the brush mover 100 in a forward mode, and the brush 80 may be moved forward to the caster 60, as shown in (b) of FIG. 9.

When the brush 80 reaches the contact position P1, the processor 18 may wait for a set time (i.e., a foreign substances removal time), and the brush 80 may be maintained for the set time.

That is, when a forward movement of the brush 80 is completed, the brush 80 may maintain a state of contact with the caster 80 for a set time.

If the sensing value of the sensor 90 is within a reference value, the processor 18 may output a signal to operate the brush mover 100 in a retreat mode.

If the sensing value of the sensor 90 is within a reference value, the processor 18 may operate the sensor 90 again when the set time has elapsed, and if the sensing value of the sensor 90 is within a reference value, the processor 18 may output a signal to operate the brush mover 100 in a retreat mode.

The brush 80 may be retracted from the caster 60 as shown in (c) of FIG. 9.

One example of the processor 18 may retract the brush 80 regardless of the sensing value of the sensor 90 when the set time has elapsed, and another example of the processor 18 can retract the brush 80 when the set time has elapsed and the sensing value of the sensor 90 is within a reference value.

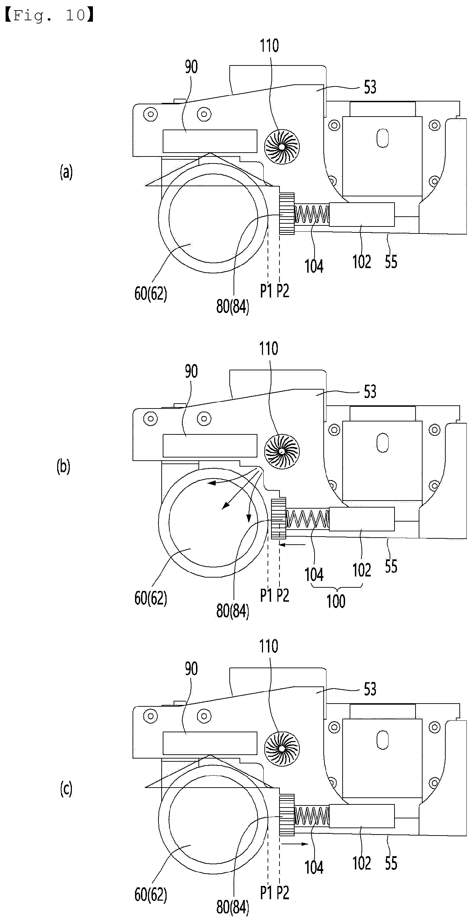

FIG. 10 is a view illustrating a caster of another example of a robot according to the present embodiment when foreign substances are removed by a brush.

The robot 10a may further comprise a fan 110 that blows air to the caster 80.

FIG. 10 (a) is a view when the sensor 90 senses foreign substances attached to the surface of the caster 60,

FIG. 10 (b) is a view when the brush 80 advances to the caster 60 and the fan 110 operates, and FIG. 10 (c) is a view when the brush 80 retracts from the caster 60 and the fan 110 stops operating.

The fan 110 may be installed in the main body 30. The fan 110 may be operated by the processor 18.

When the brush 80 moves forward, the fan 110 can be operated at the same time, and foreign substances separated from the caster 60 can be moved to the outside of the robot 10a by the air flowing from the fan 110 without being introduced into the inside of the main body 30.

The fan 110 may be operated from the time the forward mode of the brush 80 starts, or may be operated while the brush 80 moves forward, or may be operated when the brush 80 reaches the contact position P1.

When the brush 80 moves backward, the fan 110 may be stopped.

The fan 110 may be stopped from the time the backward mode of the brush 80 starts, or may be stopped while the brush 80 moves backward, or may be stopped when the brush 80 reaches the separation position P2.

The example illustrated in FIG. 10 may be identical or similar to the example illustrated in FIG. 9 in terms of other configurations and operations other than the presence or absence of a fan 110 and the control of the fan 110, and a detailed description thereof is omitted to avoid duplicate description.

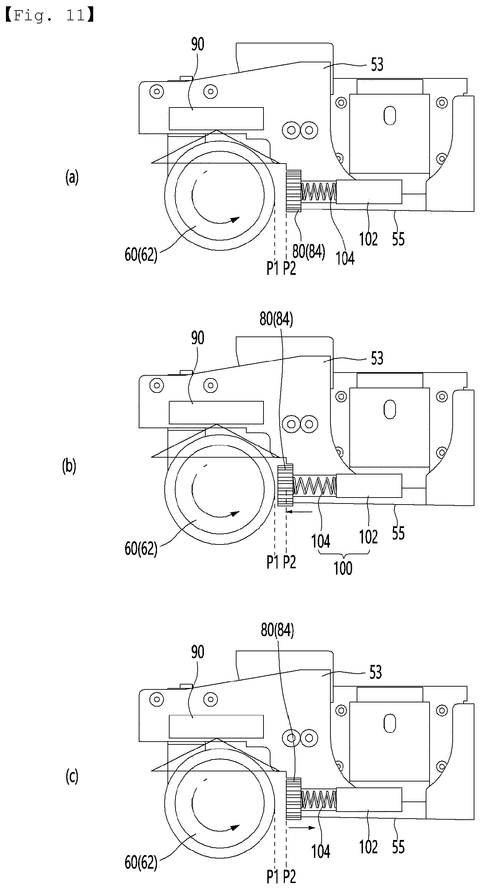

FIG. 11 is a view illustrating a caster of the other example of a robot according to the present embodiment when foreign substances are removed by a brush.

The example illustrated in FIG. 11 is that when the driving wheel 54 (shown in FIG. 5) is being driven and the sensing value of the sensor 90 exceeds the reference value, the brush 80 may be moved forward to the caster 60.

FIG. 11 (a) is a view showing when the driving wheel 54 is being driven and the sensor 90 senses foreign substances on the surface of the caster 60, FIG. 11 (b) is a view showing when the driving wheel 54 is being driven and the brush 80 is being moved forward to the caster 60, and FIG. 11 (c) is a view showing when the driving wheel 54 is being driven and the brush 80 is being moved back from the caster 60.

While the driving wheel 54 (shown in FIG. 5) is being driven, the sensing value of the sensor 90 may exceed the reference value, and the processor 18 may control the brush mover 100 to a forward mode.

The brush 80 may come into contact with the caster 60 that rotates together with the driving wheel 54, and foreign substances on the surface of the caster 60 may come into contact with the brush 80 and be separated from the caster 60.

While the driving wheel 54 is being driven, the set time may elapse, and the processor 18 may operate the sensor 90 again, and if the sensing value of the sensor 90 is within the reference value, the processor 18 may control the brush mover 100 to a backward mode.

The brush 80 may be spaced apart from the caster 60 that rotates together with the driving wheel 54.

The modified example of the example illustrated in FIG. 11 may have a different forward condition of the brush 80 from the example illustrated in FIG. 11.

When the drive wheel 54 is being driven, the robot 10a is moving forward or backward in a straight line, and the sensing value of the sensor 90 exceeds a reference value, the brush 80 may be moved forward with the caster 60

While the drive wheel 54 is being driven, the sensing value of the sensor 90 may exceed a reference value, and at this time, if the robot 10a is currently moving forward or backward in a straight line, the processor 18 may control the brush mover 100 to a forward mode.

The brush 80 may come into contact with the caster 60 that rotates together with the drive wheel 54, and foreign substances on the surface of the caster 60 may come into contact with the brush 80 and be separated from the caster 60.

While the drive wheel 54 is being driven, the set time may elapse, the processor 18 may operate the sensor 90 again, and if the sensing value of the sensor 90 is within the reference value, the processor 18 may control the brush mover 100 in a backward mode, and the brush 80 may be separated from the caster 60 that rotates together with the drive wheel 54.

Meanwhile, while the brush mover 100 is driven in a forward mode and the brush 80 is in contact with the caster 60, the robot 10a may be switched from straight driving to turning driving (right-turn driving or left-turn driving), and in a modified example of the example illustrated in FIG. 11, the brush mover 100 may be driven in a backward mode to separate the brush 80 from the caster 60.

Afterwards, when the robot 10a switches from turning driving (right-turn driving or left-turn driving) to straight driving, the brush mover 100 is driven in forward mode, so that the brush 80 may come into contact with the caster 60, and the removal of foreign substances that was temporarily stopped can be resumed.

The example illustrated in Fig. 11 may be the same as or similar to the example illustrated in Fig. 9 or Fig. 10 in terms of other configurations and operations other than the forward and backward conditions of the brush 80, and a detailed description thereof is omitted to avoid redundant description.

The above description is merely illustrative of the technical spirit of the present disclosure, and various modifications and changes can be made by those of ordinary skill in the art, without departing from the scope of the present disclosure.

Therefore, the embodiments disclosed in the present disclosure are not intended to limit the technical spirit of the present disclosure, but are intended to explain the technical spirit of the present disclosure. The scope of the technical spirit of the present disclosure is not limited by these embodiments.

The scope of the present disclosure should be interpreted by the appended claims, and all technical ideas within the scope equivalent thereto should be construed as falling within the scope of the present disclosure.

## Claims

1. A robot comprising;
a driving wheel;
a caster disposed around the driving wheel; and
a brush configured to come into contact with the caster and remove foreign substances from a surface of the caster.

2. The robot according to claim 1, further comprising;
a sensor configured to sense foreign substances on the surface of the caster; and
a brush mover configured to move the brush to a contact position in contact with the caster or move the brush to a separation position away from the caster according to a sensing value of the sensor.

3. The robot according to claim 2, wherein the sensor comprises a Tof sensor or an infrared sensor disposed apart from the surface of the caster.

4. The robot according to claim 2, wherein the brush mover comprises;
a solenoid configured to operate when the sensing value of the sensor exceeds a reference value; and
a spring connecting the solenoid and the brush,

5. The robot according to claim 2, further comprising;
a processor configured to operate the brush mover in a forward mode or a backward mode.

6. The robot of according to claim 2, wherein if the sensing value of the sensor exceeds a reference value, the brush is moved forward to the caster, and if the sensing value of the sensor is within the reference value, the brush is moved back from the caster.

7. The robot according to claim 2, wherein when a forward movement of the brush is completed, the brush is maintained for a set time.

8. The robot according to claim 2, wherein the sensor operates in a set cycle.

9. The robot according to claim 8, further comprising;
an input interface configured to vary the setting cycle,

10. The robot according to claim 2, further comprising;
a fan installed in a main body and configured to blow air to the caster.

11. The robot according to claim 10, wherein when the brush moves forward, the fan operates.

12. The robot according to claim 2, wherein if the drive wheel is driving and the sensing value of the sensor exceeds a reference value, the brush is moved forward to the caster.

13. The robot according to claim 2, wherein if the drive wheel is driving, the robot is moving in a straight line, and the sensing value of the sensor exceeds a reference value, the brush moves forward with the caster.
